# EUROPEAN PATENT SPECIFICATION

(11) **EP 4 209 666 B1**
(45) Date of publication and mention of the grant of the patent: **13.03.2024**
(21) Application number: 22168708.0
(22) Date of filing: 19.04.2022
(51) Int. Cl.: F01N 3/20, F01N 11/00

(54) **UREA SENSOR**
HARNSTOFFSENSOR
CAPTEUR D'URÉE

(30) Priority: 05.01.2022 CN 202210005734
(43) Date of publication of application: 12.07.2023
(73) Proprietor: Shenzhen Boundless Sensor Technology Co., Ltd, Shenzhen, Guangdong (CN)
(72) Inventor: Huang, Zhihui, Shenzhen (CN); Wang, Haifeng, Shenzhen (CN); Yin, Dinghong, Shenzhen (CN); Pan, Zhuying, Shenzhen (CN)
(74) Representative: Cleanthous, Marinos

(56) References cited:
- CN-A- 110 966 071
- CN-B- 104 948 271
- GB-A- 2 476 317
- US-A- 6 063 350
- US-A1- 2020 182 833
- US-B1- 9 297 686

## Description

### TECHNICAL FIELD

The present disclosure relates to the related art of achieving nitric oxide discharging control by urea injection, specifically to a urea sensor.

### BACKGROUND

Diesel engines generally achieve the national stage-VI discharge level through a Selective Catalytic Reduction (SCR) post-treatment system. Under the action of a catalyst attached to a carrier, NH3 that is a main component in urea reduces NO and NO2 in exhaust gas to generate N2 and water, so as to lower the discharge level. In order to ensure the quality of exhaust gas purification, it is necessary to ensure that the concentration of a urea solution is about 32.5%. If the concentration exceeds a specified concentration range, an alarm is required, so the concentration of the urea solution needs to be measured

At the same time, it is necessary to detect a liquid level of the urea solution in a urea tank. Once the liquid level of the urea solution is lower than a certain height, an alarm is required to prompt adding the urea solution.

Existing high-end urea sensors on the market are sold at higher prices, and the stability of a product also needs to be greatly improved. For example, US2020/182833A1 discloses a urea sensor with a top seat assembly in a tank, comprising a level sensor module and a concentration sensor module. The measurement of the concentration of the urea solution usually adopts an infrared photoelectric technology or ultrasonic measurement technology, and the measurement of the liquid level of the urea solution is mostly achieved by cooperation of a reed pipe, a magnetic sensor, and a magnetic float.

When an infrared photoelectric transmitting and receiving tube is used to measure the concentration of the urea solution, since the infrared transmitting and receiving tube (protected by an outer shell) is soaked in the urea solution with a temperature of more than 80 degrees Celsius), and the urea solution is weakly alkaline and has certain corrosiveness, so the infrared transmitting and receiving tube is easy to damage, an infrared transmitting and receiving tube protection window is easily polluted, which affects the accuracy of measurement results; the service life is short; the algorithm is complex; and the measurement accuracy is low.

When an ultrasonic sensor is used to measure the concentration of the urea solution, it is necessary to use a high-frequency ultrasonic sensor. The high-frequency ultrasonic sensor has poor formation consistency and is difficult to calibrate. The ultrasonic transmitting frequency is greatly affected by the ambient temperature. Since the frequency is measured on the basis of the Time Of Flight (TOF) principle, the change of the frequency will cause a change in measurement of the concentration of the urea solution, resulting in a measurement error. Bubbles generated by the urea solution or impurities attached to a surface of the ultrasonic sensor will affect the measurement accuracy of the concentration of the urea solution.

When a reed pipe and a magnetic float are used to measure the liquid level of the urea solution, since the reed pipe is a mechanical contact sensor, a mechanical contact is frequently opened and closed to cause short service life. Due to the limitation to the number of reed pipes used and the radial swing of the magnetic float, the measurement error is large, and a measured numerical value of the liquid level of the urea solution is discontinuous.

When a magnetic sensor (a magnetoresistive sensor, a linear Hall sensor, etc.) and a magnetic float are used to measure the liquid level of the urea solution, the measurement accuracy is better than that of the measurement method using the reed pipe; the measured numerical value of the liquid level is continuous; and the service life is longer. The disadvantage is that the measurement accuracy is easily affected by external electromagnetic interference; and the radial swing of the magnetic float (considering that the magnetic float needs to move up and down along a stainless steel tube, the aperture in the middle of the float shall be greater than the diameter of the stainless steel tube, so as to prevent the float from being stuck when it floats up and down) will cause a measurement error in the liquid level of the urea solution. The material cost is higher since multiple magnetic sensors are used to form a sensor array.

### SUMMARY

For the above problems, the present disclosure provides a urea sensor, so as to avoid the shortcomings in an existing product, reduce the material cost and manufacturing cost of the urea sensor, and improve the measurement accuracy and the product reliability at the same time. An accurate reference basis is provided for the treatment of automobile exhaust gas, so that the environment can be better protected; and the production cost of a vehicle manufacturer is reduced, so that the product is more competitive. The product can be used as an imported product substitution, so that a large amount of foreign currency is saved for the country.

In order to achieve the above purpose, the present disclosure provides a urea sensor, including a top seat assembly, a pipe assembly, and an electronic measurement module assembly. The pipe assembly includes a urea extraction pipe; the electronic measurement module assembly includes a urea liquid level measurement sensor module, a urea solution concentration measurement sensor module, and corresponding measurement mechanisms; the urea liquid level measurement sensor module includes a micro differential pressure sensor, a measurement guide pipe, and a metal electrode; the measurement guide pipe and the metal electrode are fixed in a top seat, are connected to a measurement circuit, and are used as electrodes respectively used for measuring a minimum value and a maximum value of a liquid level of a urea solution; and the urea solution concentration measurement sensor module includes a lifting device composed of a weight sensor, an object, a motor or an electromagnet, and a structural member; and one end of the weight sensor is fixed on the top seat.

Further, the pipe assembly further comprises a urea heating pipe; the urea heating pipe of the pipe assembly, the urea extraction pipe, the electronic measurement module assembly, and the measurement mechanisms are respectively mounted in the top seat or are connected to the top seat.

Further, the measurement guide pipe is a metal pipe, a bottom of which is a bevel and is provided with a radial through hole.

Further, the object is connected to the structural member through a connector; the connector passes through a hole in one end of the weight sensor; and the lifting device composed of the motor or electromagnet and the structural member can control the gravity of the object to be loaded to the weight sensor or to be unloaded from the weight sensor.

Further, a circuit board in the top seat is provided with an acceleration sensor.

Further, a barometric pressure sensor is further arranged on a circuit board in the top seat.

Further, the motor may be a brush direct-current motor, an alternating-current motor, a brushless direct-current motor or a stepping motor.

Further, the pipe assembly further includes a heating water inlet pipe, a heating water pipe, and a heating water outlet pipe which are communicated with the urea heating pipe.

Further, the pipe assembly further includes a urea solution extraction pipe and a urea solution backflow pipe which are communicated with the urea pipe.

Further, an extraction end part of the urea pipe is provided with a filter component.

Compared with the prior art, the present disclosure provides a urea sensor. The concentration of a urea solution is measured according to the principle of measuring a buoyancy generated by a specific object in liquid, so that the urea sensor has the characteristics of high accuracy of a measurement result, long service life, simple manufacturing, low material cost, small indirect error, and the like. The liquid level of the urea solution is measured according to a method for combining a stainless steel electrode and the micro differential pressure sensor, so that the urea sensor has the characteristics of accurate measurement result, high product reliability, long service life, low manufacturing cost, and the like.

### BRIEF DESCRIPTION OF THE DRAWINGS

FIG. 1 is a urea sensor structure disclosed by the present disclosure.
FIG. 2 is a circuit diagram of a urea sensor disclosed by the present disclosure.

Reference signs in the drawings: 1: motor; 2: structural member; 3: weight sensor; 4: micro differential pressure sensor; 5: top seat; 6: barometric pressure sensor; 7: acceleration sensor; 8: measurement guide pipe; 9: connector; 10: object; 11: heating water pipe; 12: filter component; 13: urea extraction pipe; 14: urea heating pipe; 15: metal electrode; 16: backflow pipe; 17: connecting line; 18: heating water outlet pipe; 19: urea solution extraction pipe; 20: urea solution backflow pipe; 21: heating water inlet pipe; 22: top cover; and 23: temperature sensor.

### DETAILED DESCRIPTION OF THE EMBODIMENTS

The following will describe the present disclosure in detail in combination with the accompanying drawings, and clearly and completely describes the technical solution in the embodiments of the present disclosure. Apparently, the described embodiments are only part of the embodiments of the present disclosure, not all embodiments. Based on the embodiments in the present disclosure, all other embodiments obtained by those of ordinary skill in the art without creative work shall fall within the protection scope of the present disclosure.

It should be noted that when a component is referred to as being "fixed" to another element, it can be directly on the other component or an intermediate component may also exist. When one component is considered to be "connected" to another component, it can be directly connected to the other component or an intermediate component may be present at the same time. When one component is considered to be "disposed" on another component, it can be directly disposed on the other component or an intermediate component may be present at the same time. The terms "vertical", "horizontal", "left", "right" and similar representations used herein are only for the purpose of illustration.

Unless otherwise defined, all technical and scientific terms used herein are the same as meanings of general understandings of those skilled in the art of the disclosure. The terms used in the description of the disclosure herein are merely to describe the specific embodiments, not intended to limit the disclosure. The term "and/or" used herein includes any and all combinations of one or more related listed items.

The technical solution of the present disclosure will be described below by taking a urea sensor disclosed in the present disclosure as an example.

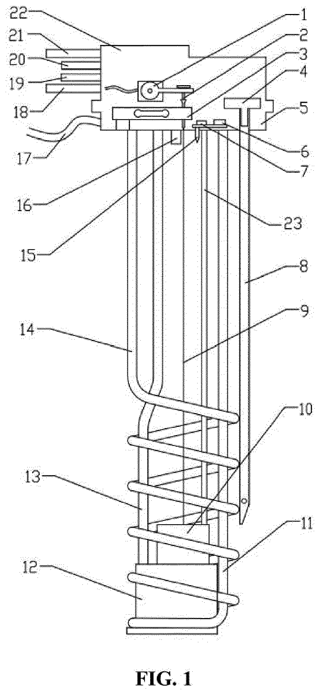

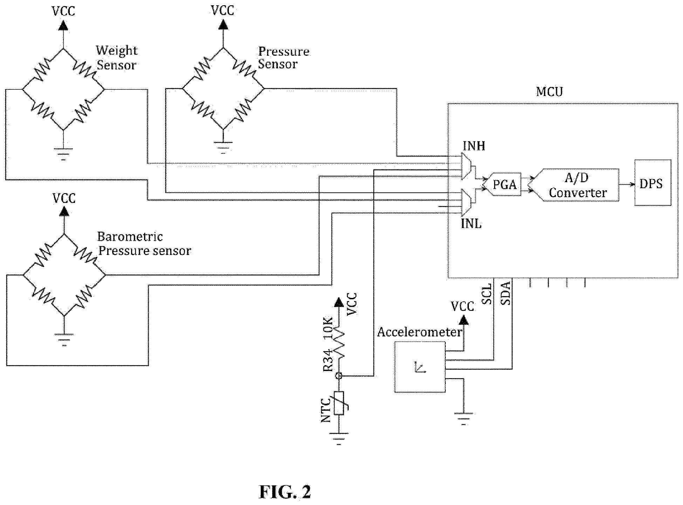

According to the example of the present disclosure, it can be known according to the structure of the urea sensor shown in FIG. 1-FIG. 2 that the urea sensor may include a top seat assembly, a pipe assembly, and an electronic measurement module assembly that form the entire appearance of the urea sensor. The pipe assembly includes a urea extraction pipe 13. The electronic measurement module assembly includes a urea liquid level measurement sensor module, a urea solution concentration measurement sensor module, and corresponding measurement mechanisms.

As shown in FIG. 1, the urea liquid level measurement sensor module includes a micro differential pressure sensor 4, a measurement guide pipe 8, and a metal electrode 15. The measurement guide pipe 8 that is a metal pipe and the metal electrode 15 are fixed in a top seat 5. The micro differential pressure sensor 4 is fixed on the top seat 5. A urea solution is fed through the measurement guide pipe 8. An output signal of the micro differential pressure sensor 4 is in linear relation with a liquid level of the urea solution. The liquid level of the urea solution in a urea tank can be obtained via calculation by means of measuring the output signal of the micro differential pressure sensor 4.

Specifically, the measurement guide pipe 8 can also be used as an electrode for measuring a minimum value of the liquid level of the urea solution. A lower end part of the measurement guide pipe 8 is a bevel and is provided with a radial hole. The measurement guide pipe 8 is connected to a measurement circuit. The metal electrode 15 is used as an electrode for measuring a maximum value of the liquid level of the urea solution. The metal electrode 15 is connected to the measurement circuit. The metal pipe, the metal electrode 15, and the urea heating pipe 14 jointly achieve the measurement of the minimum and maximum values of the liquid level of the urea solution. The minimum and maximum values of the liquid level may be automatically calibrated reference points provided by the micro differential pressure sensor 4, so as to eliminate a measurement error caused by a zero drift of the micro differential pressure sensor 4, thus further improving the measurement accuracy of the liquid level of the urea solution. The urea heating pipe 14 can avoid urea from being formed into crystals under a low-temperature environment.

As shown in FIG. 1, the urea solution concentration measurement sensor module includes a lifting device composed of a weight sensor 3, an object 10, a motor 1 or an electromagnet, and a structural member 2. One end of the weight sensor 3 is fixed on the top seat 5. When an output shaft of the motor 1 or the electromagnet anticlockwise rotates or is powered on, the structural member 2 is lifted up. The structural member 2 is connected to the object 10 through a connector 9. The object 10 is lifted up through the connector 9. At this time, there is no load on the weight sensor 3. At this time, the weight sensor 3 can automatically correct the zero. When the output shaft of the motor 1 or the electromagnet clockwise rotates or is powered off, the structural member 2 is lowered down, and the object 10 connected through the connector 9 is also lowered down. The gravity of the object 10 is applied to a load-carrying end of the weight sensor 3. The concentration of the urea solution can be calculated by measuring a buoyancy generated by the known object 10 in the urea solution. This measurement method has the advantages of high measurement accuracy and small indirect error, is less affected by the ambient temperature, and also reduces the material cost and manufacturing cost while improving the measurement accuracy and reliability.

By the above structure, it can be known that according to the characteristics of the present disclosure, accurate measurement of the concentration of the urea solution and the liquid level of the urea solution in the urea tank is achieved, and the present disclosure has unique automatic calibration and zero correction functions, so that the material and manufacturing costs are reduced, and the reliability and service life of the product are also improved.

In order to avoid urea crystallization and ensure normal injection of urea, the present disclosure provides an embodiment of water heating. Specifically, continuing to refer to FIG. 1, constitution of water heating belongs to one part of the above pipe assembly, and includes a heating water inlet pipe 21, a heating water pipe 11, and a heating water outlet pipe 18 which are communicated with the urea heating pipe 14. Cooling water (hot water) flows in from the heating water inlet pipe 21, flows through the urea heating pipe 14 and the heating water pipe 11, and then flows out from the heating water outlet pipe 18. Of course, the protection scope of the present disclosure is not limited to this. Urea crystallization can also be avoided by electric heating.

In addition, when urea is injected into an exhaust pipe, a urea pump pumps out the urea solution; the pumped urea solution flows out from the urea solution extraction pipe 19, and redundant urea solution can flow from the urea solution backflow pipe 20 through a backflow pipe 16 to the urea tank.

An extraction end of the urea extraction pipe 13 is provided with a filter component 12. The filter component 12 may be a filter net. In an extraction process, it is used for filtering impurities in the urea solution and is also used as a guide mechanism for the connector 9 and the object 10.

Preferably, a connecting line 17 is further included. The connecting line 17 is connected to an electrical appliance interface of the urea sensor.

Preferably, the urea sensor further includes a temperature sensor 23 used for measuring a temperature of the urea solution.

Preferably, a circuit board in the top seat 5 is provided with an acceleration sensor 7 and a barometric pressure sensor 6. The acceleration sensor 7 is mounted in the top seat 5. The barometric pressure sensor 6 is mounted in the top seat 5. The top seat 5 and a top cover 22 are sealed into a whole. The acceleration sensor 7 detects a vehicle acceleration or calculates, according to a detected vehicle speed, a vehicle acceleration. The barometric pressure sensor 6 indirectly measures the altitude by detecting a barometric pressure.

As a preferred solution of this embodiment, the above motor 1 can be a brush direct-current motor, an alternating-current motor, a brushless direct-current motor or a stepping motor, or an electromagnet can be used.

Those skilled in the art can easily implement the present disclosure through reading and understanding of the above-mentioned specific implementations. However, the protection scope of the present disclosure is limited only by the scope of the appended claims.

## Claims

1. A urea sensor, comprising a top seat assembly, a pipe assembly, and an electronic measurement module assembly, wherein the pipe assembly comprises a urea extraction pipe (13); the electronic measurement module assembly comprises a urea liquid level measurement sensor module, a urea solution concentration measurement sensor module, and corresponding measurement mechanisms,
**characterized in that** the urea liquid level measurement sensor module comprises a micro differential pressure sensor (4), a measurement guide pipe (8), and a metal electrode (15); the measurement guide pipe (8) and the metal electrode (15) are fixed in a top seat (5), are connected to a measurement circuit, and are used as electrodes respectively used for measuring a minimum value and a maximum value of a liquid level of a urea solution; and the urea solution concentration measurement sensor module comprises a lifting device composed of a weight sensor (3), an object (10), a motor (1) or an electromagnet, and a structural member (2); and one end of the weight sensor (3) is fixed on the top seat (5).

2. The urea sensor according to claim 1, wherein the pipe assembly further comprises a urea heating pipe (14); the urea heating pipe (14) of the pipe assembly, the urea extraction pipe (13), the electronic measurement module assembly, and the measurement mechanisms are respectively mounted in the top seat (5) or are connected to the top seat (5).

3. The urea sensor according to claim 1, wherein the measurement guide pipe (8) is a metal pipe, a bottom of which is a bevel and is provided with a radial through hole.

4. The urea sensor according to claim 1, wherein the object (10) is connected to the structural member (2) through a connector (9); the connector (9) passes through a hole in one end of the weight sensor (3); and the lifting device composed of the motor (1) or electromagnet and the structural member (2) is capable of controlling the gravity of the object (10) to be loaded to the weight sensor (3) or to be unloaded from the weight sensor (3).

5. The urea sensor according to claim 1, wherein a circuit board in the top seat (5) is provided with an acceleration sensor (7).

6. The urea sensor according to claim 1, wherein a barometric pressure sensor (6) is further arranged on a circuit board in the top seat (5).

7. The urea sensor according to claim 1 or 4, wherein the motor (1) may be a brush direct-current motor, an alternating-current motor, a brushless direct-current motor or a stepping motor.

8. The urea sensor according to claim 1, wherein the pipe assembly further comprises a heating water inlet pipe (21), a heating water pipe (11), and a heating water outlet pipe (18) which are communicated with the urea heating pipe (14).

9. The urea sensor according to claim 1, wherein the pipe assembly further comprises a urea solution backflow pipe (20) and a urea solution extraction pipe (19) which are communicated with the urea extraction pipe (13).

10. The urea sensor according to claim 9, wherein an extraction end part of the urea extraction pipe (13) is provided with a filter component (12).

## Patentansprüche

1. Harnstoffsensor, umfassend eine obere Sitzanordnung, eine Rohranordnung und eine elektronische Messmodulanordnung, wobei die Rohranordnung ein Harnstoffentnahmerohr (13) umfasst; wobei die elektronische Messmodulanordnung ein Sensormodul zur Messung des Harnstoffflüssigkeitsstands, ein Sensormodul zur Messung der Harnstofflösungskonzentration und entsprechende Messmechanismen umfasst, **dadurch gekennzeichnet, dass** das Sensormodul zur Messung des Harnstoffflüssigkeitsstands einen Mikrodifferenzdrucksensor (4), ein Messführungsrohr (8) und eine Metallelektrode (15) umfasst; wobei das Messführungsrohr (8) und die Metallelektrode (15) in einem oberen Sitz (5) befestigt sind, mit einem Messkreis verbunden sind und als Elektroden jeweils zum Messen eines Minimalwerts und eines Maximalwerts eines Flüssigkeitsstands einer Harnstofflösung; wobei das Sensormodul zur Messung der Harnstofflösungskonzentration eine Hebevorrichtung umfasst, die aus einem Gewichtssensor (3), einem Gegenstand (10), einem Motor (1) oder einem Elektromagneten und einem Strukturelement (2) besteht; und wobei ein Ende des Gewichtssensors (3) am oberen Sitz (5) befestigt ist.

2. Harnstoffsensor nach Anspruch 1, wobei die Rohranordnung ferner ein Harnstoffheizrohr (14) umfasst, wobei das Harnstoffheizrohr (14) der Rohranordnung, das Harnstoffentnahmerohr (13), die elektronische Messmodulanordnung und die Messmechanismen jeweils in dem oberen Sitz (5) montiert oder mit dem oberen Sitz (5) verbunden sind.

3. Harnstoffsensor nach Anspruch 1, wobei das Messführungsrohr (8) ein Metallrohr ist, dessen Boden eine Abschrägung aufweist und mit einer radialen Durchgangsbohrung versehen ist.

4. Harnstoffsensor nach Anspruch 1, wobei der Gegenstand (10) mit dem Strukturelement (2) durch ein Verbindungsstück (9) verbunden ist; wobei das Verbindungsstück (9) durch ein Loch in einem Ende des Gewichtssensors (3) verläuft; und wobei die Hebevorrichtung, die aus dem Motor (1) oder Elektromagneten und dem Strukturelement (2) besteht, in der Lage ist, die Schwerkraft des Gegenstands (10) zu steuern, der in den Gewichtssensor (3) geladen oder vom Gewichtssensor (3) entladen werden soll.

5. Harnstoffsensor nach Anspruch 1, wobei eine Leiterplatte im oberen Sitz (5) mit einem Beschleunigungssensor (7) versehen ist.

6. Harnstoffsensor nach Anspruch 1, wobei ein barometrischer Drucksensor (6) zusätzlich auf einer Leiterplatte im oberen Sitz (5) angeordnet ist.

7. Harnstoffsensor nach Anspruch 1 oder 4, wobei der Motor (1) ein Bürstengleichstrommotor, ein Wechselstrommotor, ein bürstenloser Gleichstrommotor oder ein Schrittmotor sein kann.

8. Harnstoffsensor nach Anspruch 1, wobei die Rohranordnung ferner ein Heizwassereinlassrohr (21), ein Heizwasserrohr (11) und ein Heizwasserauslassrohr (18) umfasst, die mit dem Harnstoffheizrohr (14) in Verbindung stehen.

9. Harnstoffsensor nach Anspruch 1, wobei die Rohranordnung außerdem ein Harnstofflösungs-Rückflussrohr (20) und ein Harnstofflösungs-Entnahmerohr (19) umfasst, die mit dem Harnstoffentnahmerohr (13) verbunden sind.

10. Harnstoffsensor nach Anspruch 9, wobei eine Leiterplatte im oberen Sitz (13) mit einem Beschleunigungssensor (12) versehen ist.

## Revendications

1. Capteur de l'urée, comprenant un composant de siège supérieur, un composant de tuyau et un composant de module de mesure électronique, dans lequel le composant de tuyau comprend un tuyau d'extraction de l'urée (13) ; le composant de module de mesure électronique comprend un module de capteur de mesure du niveau de liquide uréique, un module de capteur de mesure de la concentration en solution uréique et des mécanismes de mesure correspondants, **caractérisé en ce que** le module de capteur de mesure de niveau de liquide uréique comprend un microcapteur de pression différentielle (4), un tuyau de guidage de mesure (8) et une électrode métallique (15) ; le tuyau de guidage de mesure (8) et l'électrode métallique (15) sont fixés dans un siège supérieur (5), sont connectés à un circuit de mesure et sont utilisés comme électrodes utilisées respectivement pour mesurer une valeur minimale et une valeur maximale d'un niveau de liquide d'une solution uréique ; et le module de capteur de mesure de la concentration en solution uréique comprend un dispositif de levage composé d'un capteur de poids (3), d'un objet (10), d'un moteur (1) ou d'un électroaimant et d'un élément structurel (2) ; et une extrémité du capteur de poids (3) est fixée sur le siège supérieur (5).

2. Capteur de l'urée selon la revendication 1, dans lequel le composant de tuyau comprend en outre un tuyau de réchauffage de l'urée (14) ; le tuyau de réchauffage de l'urée (14) du composant de tuyau, le tuyau d'extraction de l'urée (13), le composant de module de mesure électronique et les mécanismes de mesure sont respectivement montés sur le siège supérieur (5) ou sont connectés au siège supérieur (5).

3. Capteur de l'urée selon la revendication 1, dans lequel le tuyau de guidage de mesure (8) est un tuyau métallique dont le fond est biseauté et pourvu d'un trou traversant radial.

4. Capteur de l'urée selon la revendication 1, dans lequel l'objet (10) est connecté à l'élément structurel (2) par l'intermédiaire d'un connecteur (9) ; le connecteur (9) passe à travers un trou à une extrémité du capteur de poids (3) ; et le dispositif de levage composé du moteur (1) ou de l'électroaimant et de l'élément structurel (2) est capable de contrôler la gravité de l'objet (10) à être chargée au capteur de poids (3) ou à être déchargée du capteur de poids (3).

5. Capteur de l'urée selon la revendication 1, dans lequel une carte de circuit imprimé située sur le siège supérieur (5) est pourvue d'un capteur d'accélération (7).

6. Capteur de l'urée selon la revendication 1, dans lequel un capteur de pression barométrique (6) est disposé en outre sur une carte de circuit imprimé dans le siège supérieur (5).

7. Capteur de l'urée selon la revendication 1 ou 4, dans lequel le moteur (1) est un moteur à courant continu à balais, un moteur à courant alternatif, un moteur à courant continu sans balais ou un moteur pas à pas.

8. Capteur de l'urée selon la revendication 1, dans lequel le composant de tuyau comprend en outre un tuyau d'entrée d'eau de réchauffage (21), un tuyau d'eau de réchauffage (11) et un tuyau de sortie d'eau de réchauffage (18) qui sont en communication avec le tuyau de réchauffage de l'urée (14).

9. Capteur de l'urée selon la revendication 1, dans lequel le composant de tuyau comprend en outre un tuyau de reflux de la solution uréique (20) et un tuyau d'extraction de la solution uréique (19) qui sont en communication avec le tuyau d'extraction de l'urée (13).

10. Capteur de l'urée selon la revendication 9, dans lequel une portion d'extrémité d'extraction du tuyau d'extraction de l'urée (13) est pourvue d'un composant filtrant (12).
